(19) Europäisches Patentamt
European Patent Office
Office européen des brevets

(11) **EP 2 933 013 A1**

(12) **EUROPEAN PATENT APPLICATION**
published in accordance with Art. 153(4) EPC

(43) Date of publication:
**21.10.2015 Bulletin 2015/43**

(51) Int Cl.:
**B01D 71/02** (2006.01)   **B01D 69/10** (2006.01)
**B01D 69/12** (2006.01)   **B01D 71/36** (2006.01)
**B01D 71/68** (2006.01)   **C22C 5/04** (2006.01)
**C22C 5/06** (2006.01)   **C22F 1/14** (2006.01)
**H01G 9/12** (2006.01)   **H01M 2/12** (2006.01)
**C22F 1/00** (2006.01)

(21) Application number: **13865762.2**

(22) Date of filing: **16.12.2013**

(86) International application number:
**PCT/JP2013/083640**

(87) International publication number:
**WO 2014/098038 (26.06.2014 Gazette 2014/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.12.2012 JP 2012275083**
**22.07.2013 JP 2013151906**

(71) Applicants:
• **Nitto Denko Corporation**
**Ibaraki-shi, Osaka 567-8680 (JP)**
• **National University Corporation Nagoya University**
**Nagoya-shi, Aichi 464-8601 (JP)**
• **Institute of National Colleges of Technology, Japan**
**Hachioji-shi, Tokyo 193-0834 (JP)**

(72) Inventors:
• **FUKUOKA, Takahiro**
**Ibaraki-shi**
**Osaka 567-8680 (JP)**

• **KIRA, Yoshiko**
**Ibaraki-shi**
**Osaka 567-8680 (JP)**
• **ISHII, Kyoko**
**Ibaraki-shi**
**Osaka 567-8680 (JP)**
• **HATA, Kenta**
**Ibaraki-shi**
**Osaka 567-8680 (JP)**
• **YUKAWA, Hiroshi**
**Nagoya-shi**
**Aichi 464-8601 (JP)**
• **NANBU, Tomonori**
**Suzuka-shi**
**Mie 510-0294 (JP)**

(74) Representative: **Grünecker Patent- und Rechtsanwälte**
**PartG mbB**
**Leopoldstraße 4**
**80802 München (DE)**

(54) **HYDROGEN-RELEASING FILM**

(57)     The purpose of the present invention is to provide a hydrogen-releasing film and a hydrogen-releasing laminated film which are less susceptible to embrittling at an ambient operating temperature of an electrochemical element. This hydrogen-releasing film comprises a Pd-Ag alloy and is characterized in that the content of Ag in the Pd-Ag alloy is 20 mol% or higher.

Fig. 1

(a)

(b)

**Description**

TECHNICAL FIELD

The present invention relates to a hydrogen-releasing film that is provided on an electrochemical element such as a battery, a condenser, a capacitor, a sensor, and the like.

BACKGROUND ART

In recent years, aluminum electrolytic capacitors have been used in an application for inverters such as the wind power generation and solar power generation, and large-scale power sources such as batteries. In the aluminum electrolytic capacitors, hydrogen gas may be generated therein by a reverse voltage, overvoltage, and overcurrent, and there is a risk of rupture of an outer case by an increase in the internal pressure due to the generation of a large amount of hydrogen gas.

Therefore, ordinary aluminum electrolytic capacitors are provided with a safety valve having a special film. In addition to a function of releasing hydrogen gas in the inside of the capacitor to the outside, the safety valve has another function of preventing the rupture of the capacitor itself by self-destruction enabling to decrease the internal pressure of the capacitor when it is abruptly increased. As the special film that is a component of such a safety valve, for example, the following has been proposed.

Patent Document 1 has proposed a pressure regulator film equipped with a foil strip composed of a Pd-Ag alloy wherein 20 wt% (19.8 mol%) of Ag is incorporated into palladium.

However, the foil strip of Patent Document 1 had a problem such that it tends to become brittle under the circumstances of about 50-60°C or less and thus cannot maintain the function as a pressure regulator film for a long period of time.

On the other hand, lithium-ion batteries are widely used in cellular phones, notebook computers, automobiles, and the like. Also in recent years, an interest in security for the lithium-ion batteries has grown in addition to higher capacity and improved cycle characteristics. In particular, gas generation in the cells of the lithium-ion batteries is known, and expansion and rupture of the battery pack accompanied with an internal pressure rise are concerned.

Patent Document 2 discloses use of an amorphous alloy (for example, 36Zr-64Ni alloy) composed of zirconium (Zr) and nickel (Ni) as a hydrogen permselective alloy film that selectively permeates hydrogen gas generated in the battery.

However, since the amorphous alloy becomes brittle due to the formation of a hydride compound ($ZrH_2$) upon contact with hydrogen at a low temperature range (e.g. 50°C), such alloy had a problem in that it could not maintain the function as a pressure regulator film for a long period of time.

Prior Art Document

Patent Documents

Patent Document 1: Japanese patent No. 4280014
Patent Document 2: JP-A-2003-297325

SUMMARY OF THE INVENTION

Problems to be Solved by the Invention

The present invention has been made in view of the above problems, and an object thereof is to provide a hydrogen-releasing film and a hydrogen-releasing laminated film, which are less susceptible to embrittling at an ambient operating temperature of an electrochemical element. In addition, it is another object of the present invention to provide a safety valve for an electrochemical element, wherein the valve is provided with the hydrogen-releasing film or hydrogen-releasing laminated film, and to provide an electrochemical element having the safety valve.

MEANS FOR SOLVING THE PROBLEMS

The invention is related to a hydrogen-releasing film, comprising a Pd-Ag alloy wherein the content of Ag in the Pd-Ag alloy is 20 mol% or higher.

The hydrogen-releasing film containing the Pd-Ag alloy has a function to dissociate a hydrogen molecule into a hydrogen atom on the film surface; solve the hydrogen atom in the film; diffuse the hydrogen atom-solution to the low pressure side from the high pressure side; convert the hydrogen atom into the hydrogen molecule again on the film surface of the low pressure side; and release the hydrogen gas.

The reason why the Pd-20 wt% Ag alloy of Patent Document 1 easily becomes brittle under the circumstances of about 50-60°C or less is considered as follows. The Pd-20 wt% Ag alloy is considered to have the following properties: $\alpha$-lattice phase is difficult to change even if hydrogen atoms are solved in the high-temperature range, but a phase change of part of $\alpha$-lattice phase into $\beta$-lattice phase occurs when the hydrogen atoms are solved in the low temperature range of about 50-60°C or less, and a phase change of $\beta$-lattice phase into $\alpha$-lattice phase occurs again upon dehydrogenation. And since the lattice coefficient of the $\beta$-lattice phase is larger than that of the $\alpha$-lattice phase, a distortion occurs in a region ($\alpha+\beta$ lattice phase) where the $\alpha$-lattice phase and the $\beta$-lattice phase coexist. Therefore, if formation of hydrogen solution and dehydrogenation are repeated, destruction is considered to occur due to distortion in the $\alpha+\beta$ lattice phase, resulting in causing embrittlement of the Pd-20 wt% Ag alloy.

The present inventors found that a hydrogen-releasing film formed by using a Pd-Ag alloy wherein the content of Ag is 20 mol% or higher becomes less susceptible to embrittling even in a low temperature range of about 50-60°C or less. Even if hydrogen atoms are solved in the Pd-Ag alloy in which the content of Ag is 20 mol% or higher, in a low temperature range of about 50-60°C or less, phase change of $\alpha$-lattice phase into $\beta$-lattice phase does not easily occur, that is, ($\alpha + \beta$) -lattice phase is considered not to be easily formed. Therefore, it is thought that embrittling in the Pd-Ag alloy of the present invention is unlikely to occur even if formation of hydrogen solution and dehydrogenation are repeated.

The hydrogen-releasing film preferably contains a Pd-Ag alloy in which the content of Ag is 20 to 60 mol%, and it is preferable that the film thickness t (m) and the film area s ($m^2$) satisfy the following equation 1.

$$\text{<Equation 1> } t/s < 32.9 \text{ m}^{-1}$$

The hydrogen-releasing film provided to an electrochemical element is determined to have a hydrogen permeation amount of 10 ml/day or more ($4.03 \times 10^{-4}$ mol/day or more: calculated according to SATP (temperature 25°C; volume of 1 mol ideal gas at an atmospheric pressure of 1 bar: 24.8 L)) at square root of 76.81 $Pa^{1/2}$ (0.059 bar) of the pressure. The hydrogen-releasing film having an Ag content of 20 to 60 mol% in the Pd-Ag alloy of the present invention has a hydrogen permeation coefficient of $1.0 \times 10^{-13}$ to $2.0 \times 10^{-9}$ (mol·$m^{-1}$· $sec^{-1}$·$Pa^{-1/2}$). Here, the hydrogen permeability coefficient is determined by the following equation 2.

$$\text{<Equation 2>}$$

$$\text{Hydrogen permeation coefficient = (Hydrogen moles} \times \text{film}$$

$$\text{thickness t)/(film area s} \times \text{time} \times \text{Square root of pressure)}$$

In the case where the hydrogen permeation amount is 10 ml/day ($4.03 \times 10^{-4}$ mol/day) and the hydrogen permeation coefficient is $2.0 \times 10^{-9}$ (mol·$m^{-1}$·$sec^{-1}$$Pa^{-1/2}$), each numerical value is assigned to the equation 2 as follows.

$$2.0 \times 10^{-9} = (4.03 \times 10^{-4} \times \text{film thickness t)/(film area}$$

$$s \times 86400 \times 76.81)$$

$$2.0 \times 10^{-9} = 6.08 \times 10^{-11} \times \text{film thickness t/film area s}$$

$$\text{Film thickness t/Film area s = 32.9 m}^{-1}$$

Therefore, in the case of using a hydrogen permeation film having a hydrogen permeation coefficient of $1.0 \times 10^{-13}$ to $2.0 \times 10^{-9}$ (mol·$m^{-1}$·$sec^{-1}$·$Pa^{-1/2}$), the condition in which the hydrogen permeation amount becomes 10 ml/day or more ($4.03 \times 10^{-4}$ mol/day or more) satisfies the following equation: film thickness t/film area s < 32.9 $m^{-1}$. In addition, the hydrogen permeation coefficient at 50°C of the hydrogen-releasing film whose Ag content in the Pd-Ag alloy according to the present invention is 20 to 60 mol% is preferably $2.0 \times 10^{-11}$ to $2.0 \times 10^{-9}$ (mol·m$^{-1}$·sec$^{-1}$·Pa$^{-1/2}$).

The hydrogen-releasing laminated film of the present invention has a support on one side or both sides of the hydrogen-releasing film. The support is provided in order to prevent the hydrogen-releasing film from falling into the electrochemical element when the hydrogen-releasing film is detached from the safety valve. In addition, the hydrogen-releasing film is required to have a self-destructive function as a safety valve when the internal pressure of the electrochemical element becomes equal to or greater than a predetermined value. If the hydrogen-releasing film is a thin film, it has a risk of self-destruction before the internal pressure of the electrochemical element reaches a predetermined value because of the low mechanical strength of the hydrogen-releasing film and results in failure to fulfill the function as a safety valve. Therefore, when the hydrogen-releasing film is a thin film, it is preferable to laminate a support on one side or both sides of the hydrogen-releasing film in order to improve the mechanical strength.

The support is preferably a porous body having an average pore diameter of 100 $\mu$m or less. If the average pore diameter is more than 100 $\mu$m, the surface smoothness of the porous body decreases, because of which in the production of the hydrogen-releasing film by the sputtering method or the like, it becomes difficult to form a hydrogen-releasing film having a uniform film thickness on the porous body, or pinholes or cracks tend to easily occur in the hydrogen-releasing film.

The support is preferably formed of a polytetrafluoroethylene or a polysulfone from the viewpoint of chemical and thermal stability.

Also, the present invention relates to a safety valve for an electrochemical element, which is provided with the hydrogen-releasing film or the hydrogen-releasing laminated film, and relates to an electrochemical element having the safety valve. The electrochemical element includes, for example, an aluminum electrolytic capacitor and a lithium ion battery.

EFFECT OF THE INVENTION

The hydrogen-releasing film and the hydrogen-releasing laminated film according to the present invention are characterized in that they are less susceptible to embrittling at an ambient operating temperature of an electrochemical element. In addition, the hydrogen-releasing film and the hydrogen-releasing laminated film of the present invention not only can rapidly release only the hydrogen gas generated in the inside of the electrochemical element to the outside, but also can prevent impurities from the outside from penetrating the inside of the electrochemical element. Moreover, a safety valve provided with the hydrogen-releasing film and the hydrogen-releasing laminated film of the present invention can reduce the internal pressure by self-destruction if the internal pressure of the electrochemical element has rapidly increased, so that the rupture of the electrochemical element itself can be prevented. These effects enable the performance of the electrochemical element to be maintained for a long time, making it possible to prolong the life of the electrochemical element.

BRIEF DESCRIPTION OF THE DRAWINGS

Fig. 1 is a schematic sectional view showing the structure of the hydrogen-releasing laminated film of the present invention.
Fig. 2 is a schematic sectional view showing the structure of the hydrogen-releasing laminated film of the present invention.
Fig. 3 is a photograph after the evaluation test of the hydrogen-releasing films produced in Example 1 and Comparative Example 1.
Fig. 4 is an SEM photograph of the surface after the evaluation test of the hydrogen-releasing laminated film produced in Example 4.
Fig. 5 is an SEM photograph of the surface after the evaluation test of the hydrogen-releasing laminated film produced in Comparative Example 2.

MODE FOR CARRYING OUT THE INVENTION

Hereinafter, embodiments of the present invention will be described.

As the raw material for the hydrogen-releasing film of the present invention, a Pd-Ag alloy in which the content of Ag is 20 mol% or higher is used. The higher the content of Ag becomes, the more difficult the hydrogen embrittlement in a low temperature range occurs. Thus, the content of Ag is preferably 30 mol% or higher, more preferably 40 mol% or higher, and furthermore preferably 50 mol% or higher. On the other hand, when the content of Ag increases too much, the hydrogen permeation rate tends to decrease, and therefore the upper limit of the content of Ag is usually 60 mol% or less. Also, the Pd-Ag alloy may contain a metal of Group IB and/or Group IIIA within a range not to impair the effects of the present invention.

The hydrogen-releasing film of the present invention can be produced by, for example, a rolling method, a sputtering method, a vacuum deposition method, an ion plating method, and a plating method, but when producing a thick hydrogen-releasing film, it is preferable to use the rolling method and when producing a thin hydrogen-releasing film, it is preferable to use the sputtering method.

The rolling method may be a hot rolling method or a cold rolling method. The rolling method is a method comprising rotating a pair or pairs of rolls (rollers) and processing a raw material, Pd-Ag alloy into a film by passing it between the rolls under pressure.

The thickness of the hydrogen-releasing film obtained by the rolling method is preferably 5 to 50 μm, more preferably 10 to 30 μm. If the thickness of the film is less than 5 μm, pinholes or cracks are likely to occur in the production of the film, and deformation of such a film easily occurs after absorbing hydrogen. On the other hand, when the thickness of the film is more than 50 μm, such a film is not desirable because its hydrogen-releasing performance is reduced due to a long time required for the hydrogen permeation and because the film is inferior in terms of cost.

The sputtering method is not particularly limited, and can be carried out by using a sputtering apparatus such as a parallel flat plate type sputtering apparatus, a sheet type sputtering apparatus, a passing type sputtering apparatus, a DC sputtering apparatus, and an RF sputtering apparatus. For example, after having attached a substrate to a sputtering apparatus in which a Pd-Ag alloy target is placed, the sputtering apparatus is evacuated, adjusted to a predetermined pressure value with an Ar gas, and a predetermined sputtering current is charged to the Pd-Ag alloy target, thereby to form a Pd-Ag alloy film on the substrate. Then, the Pd-Ag alloy film is peeled off from the substrate to obtain a hydrogen-releasing film. It should be noted that it is possible to use, as the target, a single or multiple targets according to the hydrogen-releasing film to be produced.

Usually, a sputtered film is obtained by, for example, heating the support to about room temperature to 500°C in advance, forming a sputtered film thereon, and cooling it. Then, since hydrogen embrittlement is suppressed upon heating of the sputtered film again, this heating process is preferred. It is thought that this suppression is due to an increased crystallinity causing a decreased defect. Specifically, when the sputtered film is heated at 100 to 300°C for 5 minutes to 24 hours in a dryer after having formed the sputtered film at 50 to 300°C, it is thought that crystal grains in the film grow to reduce the crystal defects, resulting in decrease of the stress concentration part, thereby less causing a film rupture due to the hydrogen embrittlement.

As the substrate, it includes, for example, a glass plate, a ceramic plate, a silicon wafer, and a metal plate such as aluminum and stainless steel.

The thickness of the hydrogen-releasing film obtained by the sputtering method is preferably 0.01 to 5 μm, more preferably 0.05 to 2 μm. If the thickness of the film is less than 0.01 μm, not only may pinholes be formed, but also it is difficult to obtain a required mechanical strength. Also, when the film is peeled off from the substrate, it is likely to be damaged and its handling after the peeling becomes difficult. On the other hand, when the thickness of the film is more than 5 μm, it takes time to produce the hydrogen-releasing film and such a film is inferior in regards to cost, which is not desirable.

The film area of the hydrogen-releasing film can be appropriately adjusted in consideration of the hydrogen permeation amount and the film thickness, but when the hydrogen-releasing film is used as a component of a safety valve, the film area is about 0.01 to 100 mm$^2$. It should be noted that the film area in the present invention is an area of actually releasing hydrogen in the hydrogen-releasing film and does not include a portion coated with a ring-shaped adhesive which will be described later.

The hydrogen-releasing laminated film may be formed by providing a support on one side or both sides of the hydrogen-releasing film. In particular, since the hydrogen-releasing film obtained by the sputtering method has a thin film thickness, it is preferable to laminate a support on one side or both sides of the hydrogen-releasing film in order to improve the mechanical strength.

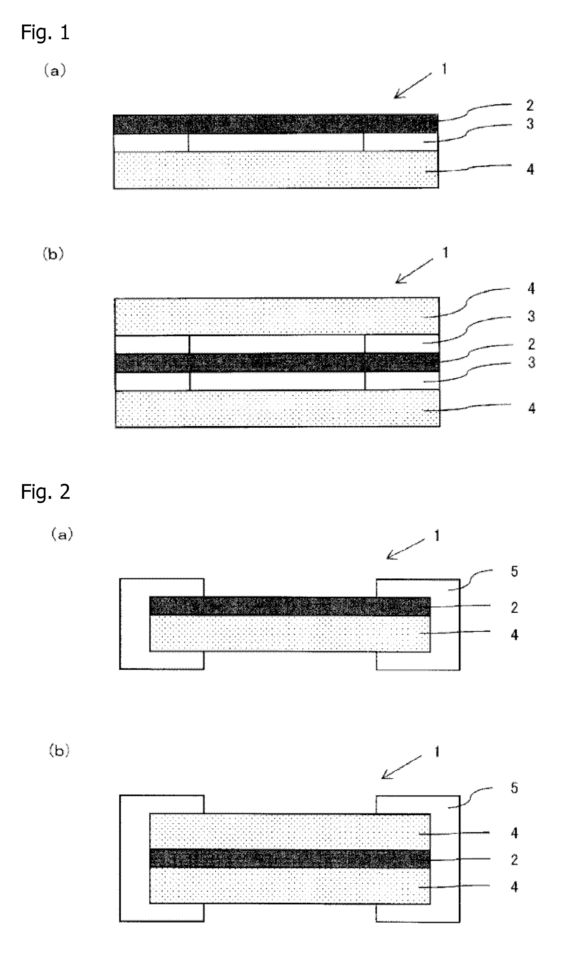

Fig. 1 and Fig. 2 are each a schematic sectional view showing the structure of a hydrogen-releasing laminated film 1 of the present invention. As shown in Fig. 1 (a) or 1(b), a support 4 may be laminated on one side or both sides of a hydrogen-releasing film 2 using a ring-shaped adhesive 3, and as shown in Fig. 2 (a) or 2(b), the support 4 may be laminated on one side or both sides of the hydrogen-releasing film 2 using a jig 5.

The support 4 is hydrogen permeable and is not particularly limited as long as it can support the hydrogen-releasing film 2. The support may be a non-porous body or may be a porous body. Also, the support 4 may be a woven fabric or may be a non-woven fabric. As a material for forming the support 4, it includes, for example, polyolefins such as polyethylene and polypropylene, polyesters such as polyethylene terephthalate and polyethylene naphthalate, polyarylethersulfones such as polysulfone and polyethersulfone, fluororesins such as polytetrafluoroethylene and polyvinylidene fluoride, epoxy resins, polyamides, polyimides, and the like. Of these, chemically and thermally stable polysulfone or polytetrafluoroethylene is preferably used.

The thickness of the support 4 is not particularly limited, but is usually about 5 to 1000 μm, preferably 10 to

300 μm.

When producing the hydrogen-releasing film 2 by the sputtering method, such film can be directly formed on the support 4 which is used as a substrate and the hydrogen-releasing laminated film 2 can be produced without using the adhesive 3 or jig 5. Thus, this method is preferable from the viewpoint of physical properties and production efficiency of the hydrogen-releasing laminated film 1. In that case, it is preferable to use, as the support 4, a porous body having an average pore diameter of 100 μm or less, more preferable to use a porous body having an average pore diameter of 5 μm or less, and particularly preferable to use an ultrafiltration membrane (UF membrane).

The shape of the hydrogen-releasing film and the hydrogen-releasing laminated film of the present invention may be substantially circular or polygonal such as triangle, square, and pentagon. Any shape can be taken depending on the application to be described later.

The hydrogen-releasing film and the hydrogen-releasing laminated film of the present invention are particularly useful as a component of a safety valve for an aluminum electrolytic capacitor or a lithium ion battery.

Examples

Description will be given of the invention with examples, while the invention is not limited to description in the examples.

Example 1

[Preparation of Hydrogen-Releasing Film by Rolling Method (Content of Ag: 40 mol%)]

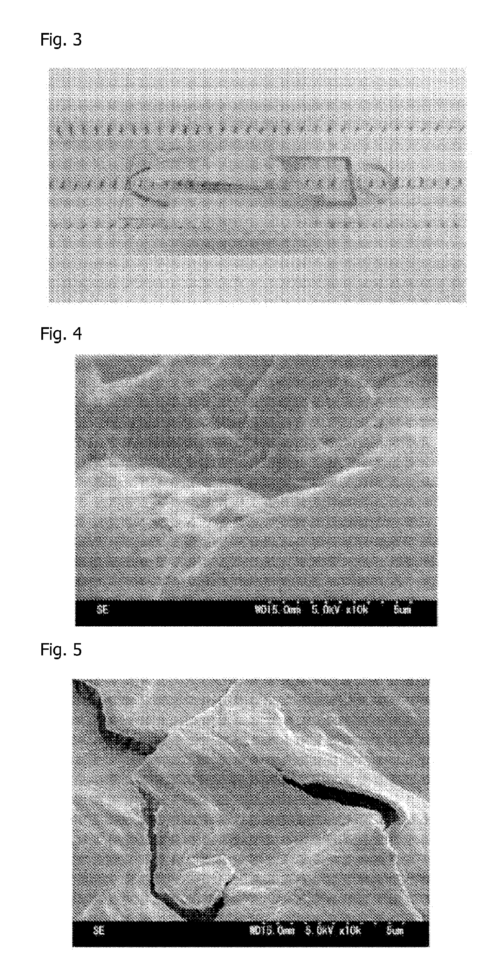

The raw materials Pd and Ag were each weighed so that the content of Ag in an ingot became 40 mol%, charged into an arc melting furnace equipped with a water-cooled copper crucible and subjected to arc melting in an Ar gas atmosphere under atmospheric pressure. The obtained button ingot was cold-rolled to a thickness of 5 mm using a two-stage rolling mill having a diameter of 100 mm to obtain a rolled sheet material. Then the rolled sheet material was placed in a glass tube and the both ends of the glass tube were sealed. After reducing the inside pressure of the glass tube to 5 x 10$^{-4}$ Pa at room temperature, the temperature was then raised to 700°C and the glass tube was allowed to stand for 24 hours, followed by cooling to room temperature. By this heat treatment, the segregation of Pd and Ag in the alloy was removed. Then, the sheet material was cold-rolled to 100 μm using a two-stage rolling mill having a roll diameter of 100 mm and further cold-rolled to 25 μm using a two-stage rolling mill having a roll diameter of 20 mm. Then the rolled sheet material was placed in a glass tube and the both ends of the glass tube were sealed. The inside pressure of the glass tube was reduced to 5 x 10$^{-4}$ Pa at room temperature, the temperature was then raised to 700°C, and the glass tube was allowed to stand for 1 hour, followed by cooling to room temperature. By this heat treatment, the internal strain in the Pd-Ag alloy caused by rolling was removed, to prepare a hydrogen-releasing film containing Pd-Ag and having a thickness of 25 μm and an Ag content of 40 mol%. When the hydrogen embrittlement of the hydrogen-releasing film was evaluated in the following manner, appearance changes such as distortion were not observed (see the film of lower side in Fig. 3).

Examples 2 to 5

A hydrogen-releasing film containing Pd-Ag was prepared in the same manner as in Example 1, except that the values described in Table 1 were used. When the hydrogen embrittlement of the hydrogen-releasing film was evaluated in the following manner, appearance changes such as distortion were not observed.

Comparative Example 1

[Preparation of Hydrogen-Releasing Film by Rolling Method (Content of Ag: 19.8 mol%)]

A hydrogen-releasing film containing Pd-Ag and having a thickness of 25 μm and an Ag content of 19.8 mol% was prepared in the same manner as in Example 1, except that the raw materials Pd and Ag were respectively used so that the content of Ag in an ingot became 19.8 mol%. When the hydrogen embrittlement of the hydrogen-releasing film was evaluated in the following manner, a distortion occurred on the hydrogen-releasing film, because of which the film could not be practically used (see the film of upper side in Fig. 3).

Example 6

[Preparation of Hydrogen-Releasing Laminated Film by Sputtering Method (Content of Ag: 40 mol%)]

A polysulfone porous sheet (pore diameter: 0.001 to 0.02 $\mu$m, manufactured by NITTO DENKO CORPORATION) as a support was attached to an RF magnetron sputtering apparatus (manufactured by Sanyu Electron Co. , Ltd.) equipped with a Pd-Ag alloy target in which the content of Ag is 40 mol%. Then, after evacuation of air in the sputtering apparatus to $1 \times 10^{-5}$ Pa or less, a sputtering current of 4 . 8 A was applied to the Pd-Ag alloy target for 6 minutes under an Ar gas pressure of 1.0 Pa to form a Pd-Ag alloy film with 0.4 $\mu$m thickness (Ag content: 40 mol%) on a polysulfone porous sheet to prepare a hydrogen-releasing laminated film. When the hydrogen-releasing laminated film was evaluated on the hydrogen embrittlement in the following manner, it was found that no cracks were generated on the surface of the film (see Fig. 4).

Examples 7 to 14

A hydrogen-releasing laminated film containing Pd-Ag was prepared in the same manner as in Example 6, except that the values described in Table 1 were used. When the hydrogen embrittlement of the hydrogen-releasing laminated film was evaluated in the following manner, appearance changes such as distortion were not observed.

Comparative Example 2

[Preparation of Hydrogen-Releasing Laminated Film by Sputtering Method (Content of Ag: 19.8 mol%)]

A hydrogen-releasing laminated film (content of Ag: 19.8 mol%) having a thickness of 0.4 $\mu$m was prepared in the same manner as in Example 6, except that a Pd-Ag alloy target wherein the content of Ag is 19.8 mol% was used. When the hydrogen-releasing laminated film was evaluated on the hydrogen embrittlement in the following manner, it was found that cracks were formed on the surface of the film (see Fig. 5). It is thought that hydrogen embrittlement occurred.

[Evaluation and Calculation Method]

(Evaluation Method of Hydrogen Embrittlement of Hydrogen-Releasing Film Prepared by Rolling Method)

The prepared hydrogen-releasing film was placed in a glass tube and the both ends of the glass tube were sealed. The inside pressure of the glass tube was reduced to a pressure of $5 \times 10^{-3}$ Pa at 50°C, and the temperature was then raised to 400°C. Then hydrogen gas was introduced into the glass tube and allowed to stand for one hour under an atmosphere of 105 kPa. Thereafter, the glass tube was cooled to room temperature and the inside of the glass tube was evacuated to a pressure of $5 \times 10^{-3}$ Pa (30 minutes) . Then, hydrogen gas was introduced into the glass tube again and allowed to stand for one hour under an atmosphere of 105 kPa. After repeating the above operation three times, the hydrogen-releasing film was removed from the glass tube and the appearance of the hydrogen-releasing film was visually observed and evaluated by the following criteria. The evaluation results are shown in Table 1.

○: No change in appearance such as distortion
×: Occurrence of distortion

(Evaluation Method of Hydrogen Embrittlement of Hydrogen-Releasing Laminated Film Prepared by Sputtering Method)

The prepared hydrogen-releasing laminated film was placed in a glass tube and the both ends of the glass tube were sealed. After the inside of the glass tube was reduced to a pressure of $5 \times 10^{-3}$ Pa at 50°C, hydrogen gas was introduced into the glass tube and the glass tube was allowed to stand for one hour under an atmosphere of 105 kPa. Thereafter, the hydrogen-releasing laminated film was removed from the glass tube and the surface of the film was observed by SEM, followed by evaluation using the following criteria. The evaluation results are shown in Table 1.

○: No crack on the surface

×: Occurrence of crack on the surface

(Calculation Method of Hydrogen Permeation Coefficient)

A hydrogen-releasing film or a hydrogen-releasing laminated film was installed between space A and space B, and hydrogen gas of 0.1 MPa was filled in the space A (volume 100 mL). Then, the space B (volume 100 mL) was decompressed by a vacuum pump and allowed to stand at 50°C for 6 hours. The mole number of hydrogen which had moved was calculated from the pressure change in the space A or B, and assigned to the following equation to calculate a hydrogen permeability coefficient. It should be noted that in the case of the hydrogen-releasing laminated film, the thickness of the Pd-Ag alloy film was defined as t. The calculated value is shown in Table 1. Hydrogen permeation coefficient = (Mole number of hydrogen × film thickness t) / (film area s × time × Square root of pressure)

[Table 1]

| | Content of Ag (mol%) | Thickness (μm) | Preparation method | Sputtering time (min) | Support | Evaluation of hydrogen embrittlement | Hydrogen permeation coefficient (mol·m$^{-1}$·sec$^{-1}$·Pa$^{-1/2}$) |
|---|---|---|---|---|---|---|---|
| Example 1 | 40 | 25 | Rolling method | - | - | ○ | $3 \times 10^{-11}$ |
| Example 2 | 20 | 20 | Rolling method | - | - | ○ | $2 \times 10^{-10}$ |
| Example 3 | 30 | 25 | Rolling method | - | - | ○ | $2 \times 10^{-11}$ |
| Example 4 | 50 | 25 | Rolling method | - | - | ○ | $4 \times 10^{-12}$ |
| Example 5 | 60 | 20 | Rolling method | - | - | ○ | $1 \times 10^{-13}$ |
| Comparative Example 1 | 19.8 | 25 | Rolling method | - | - | × | - |
| Example 6 | 40 | 0.4 | Sputtering Method | 6 | Polysulfone | ○ | $3 \times 10^{-10}$ |
| Example 7 | 20 | 0.4 | Sputtering Method | 6 | Polysulfone | ○ | $2 \times 10^{-9}$ |
| Example 8 | 30 | 0.4 | Sputtering Method | 6 | Polysulfone | ○ | $9 \times 10^{-10}$ |
| Example 9 | 40 | 0.01 | Sputtering Method | 0.5 | Polysulfone | ○ | $8 \times 10^{-10}$ |
| Example 10 | 40 | 0.06 | Sputtering Method | 1.5 | Polysulfone | ○ | $5 \times 10^{-10}$ |
| Example 11 | 40 | 0.1 | Sputtering Method | 2 | Polysulfone | ○ | $7 \times 10^{-10}$ |
| Example 12 | 40 | 0.2 | Sputtering Method | 3 | Polysulfone | ○ | $4 \times 10^{-10}$ |
| Example 13 | 50 | 0.4 | Sputtering Method | 6 | Polysulfone | ○ | $8 \times 10^{-12}$ |

(continued)

| | Content of Ag (mol%) | Thickness (μm) | Preparation method | Sputtering time (min) | Support | Evaluation of hydrogen embrittlement | Hydrogen permeation coefficient (mol·m$^{-1}$·sec$^{-1}$·Pa$^{-1/2}$) |
|---|---|---|---|---|---|---|---|
| Example 14 | 60 | 0.4 | Sputtering Method | 6 | Polysulfone | ○ | $6 \times 10^{-13}$ |
| Comparative Example 2 | 19.8 | 0.4 | Sputtering Method | 6 | Polysulfone | × | - |

INDUSTRIAL APPLICABILITY

The hydrogen-releasing film and the hydrogen-releasing laminated film according to the present invention are preferably used as a component of a safety valve provided on an electrochemical element such as a battery, a condenser, a capacitor, a sensor, and the like.

DESCRIPTION OF REFERENCE SIGNS

1:  Hydrogen-releasing laminated film
2:  Hydrogen-releasing film
3:  Adhesive
4:  Support
5:  Jig


**Claims**

1. A hydrogen-releasing film, comprising a Pd-Ag alloy wherein the content of Ag in the Pd-Ag alloy is 20 mol% or higher.

2. The hydrogen-releasing film according to claim 1, wherein the content of Ag in the Pd-Ag alloy is 20 to 60 mol%, and the film thickness t and the film area s satisfy the following equation 1:

$$t/s < 32.9 \ m^{-1}.$$

3. A hydrogen-releasing laminated film, wherein a support is provided on one side or both sides of the hydrogen-releasing film according to claim 1 or 2.

4. The hydrogen-releasing laminated film according to claim 3, wherein the support is a porous body having an average pore diameter of 100 $\mu$m or less.

5. The hydrogen-releasing laminated film according to claim 3 or 4, wherein the raw material of the support is a polytetrafluoroethylene or a polysulfone.

6. A safety valve for an electrochemical element, wherein the valve is provided with the hydrogen-releasing film according to claim 1 or 2 or the hydrogen-releasing laminated film according to any one of claims 3 to 5.

7. An electrochemical element, wherein the element is provided with the safety valve according to claim 6.

8. The electrochemical element according to claim 7, wherein the electrochemical element is an aluminum electrolytic capacitor or a lithium ion battery.

Fig. 1

(a)

(b)

Fig. 2

(a)

(b)

Fig. 3

Fig. 4

Fig. 5

## INTERNATIONAL SEARCH REPORT

| | International application No. |
|---|---|
| | PCT/JP2013/083640 |

A.  CLASSIFICATION OF SUBJECT MATTER
*B01D71/02*(2006.01)i, *B01D69/10*(2006.01)i, *B01D69/12*(2006.01)i,
*B01D71/36*(2006.01)i, *B01D71/68*(2006.01)i, *C22C5/04*(2006.01)i,
*C22C5/06*(2006.01)i, *C22F1/14*(2006.01)i, *H01G9/12*(2006.01)i,
According to International Patent Classification (IPC) or to both national classification and IPC

B.  FIELDS SEARCHED

Minimum documentation searched (classification system followed by classification symbols)
B01D71/02, B01D69/10, B01D69/12, B01D71/36, B01D71/68, C22C5/04, C22C5/06,
C22F1/14, H01G9/12, H01M2/12, C22F1/00

Documentation searched other than minimum documentation to the extent that such documents are included in the fields searched
    Jitsuyo Shinan Koho          1922–1996    Jitsuyo Shinan Toroku Koho    1996–2014
    Kokai Jitsuyo Shinan Koho    1971–2014    Toroku Jitsuyo Shinan Koho    1994–2014

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2005-254191 A  (Noritake Co., Ltd.),<br>22 September 2005 (22.09.2005),<br>claims; paragraphs [0001] to [0041], [0043];<br>fig. 1, 2<br>(Family: none) | 1-4<br>1-8 |
| X<br>Y | JP 2004-216275 A  (NGK Insulators, Ltd.),<br>05 August 2004 (05.08.2004),<br>claims; paragraphs [0001] to [0051]; fig. 1 to<br>3<br>(Family: none) | 1-4<br>1-8 |

☒ Further documents are listed in the continuation of Box C.  ☐ See patent family annex.

| | |
|---|---|
| *  Special categories of cited documents:<br>"A"  document defining the general state of the art which is not considered  to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    03 March, 2014 (03.03.14) | Date of mailing of the international search report<br>    11 March, 2014 (11.03.14) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/083640

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2007-38111 A  (Tanaka Kikinzoku Kogyo Kabushiki Kaisha),<br>15 February 2007 (15.02.2007),<br>claims; paragraphs [0001] to [0027]; fig. 1 to 3<br>(Family: none) | 1-4<br>1-8 |
| X<br>Y | JP 2003-118027 A  (Toyo Kohan Co., Ltd.),<br>23 April 2003 (23.04.2003),<br>claims; paragraphs [0001] to [0023]; fig. 1 to 6<br>(Family: none) | 1-4<br>1-8 |
| Y | JP 2004-188358 A  (Honda Motor Co., Ltd.),<br>08 July 2004 (08.07.2004),<br>claims; paragraph [0025]<br>(Family: none) | 1-8 |
| Y | JP 2005-502158 A  (The Gillette Co.),<br>20 January 2005 (20.01.2005),<br>claims; paragraphs [0001] to [0033]<br>& EP 1479115 A2          & WO 2002/059990 A2<br>& CN 1568555 A | 1-8 |
| Y | JP 2004-228019 A  (Toshiba Corp.),<br>12 August 2004 (12.08.2004),<br>claims; paragraphs [0001] to [0017], [0037] to [0062]<br>(Family: none) | 1-8 |
| Y | JP 2004-221129 A  (Optnics Precision Co., Ltd.),<br>05 August 2004 (05.08.2004),<br>claims; paragraphs [0001] to [0062]<br>(Family: none) | 1-8 |
| A | JP 3-146122 A  (Tokyo Gas Co., Ltd.),<br>21 June 1991 (21.06.1991),<br>claims; page 3, upper left column, lines 1 to 8<br>(Family: none) | 1-8 |
| A | JP 2002-206135 A  (W.C. Heraeus GmbH & Co. KG.),<br>26 July 2002 (26.07.2002),<br>paragraphs [0002], [0003]<br>& US 2002/0058181 A1     & EP 1206958 A1 | 1-8 |

Form PCT/ISA/210 (continuation of second sheet) (July 2009)

**INTERNATIONAL SEARCH REPORT**

| International application No. |
| --- |
| PCT/JP2013/083640 |

Continuation of A. CLASSIFICATION OF SUBJECT MATTER
  (International Patent Classification (IPC))

*H01M2/12*(2006.01)i, *C22F1/00*(2006.01)n

        (According to International Patent Classification (IPC) or to both national classification and IPC)

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4280014 B
- JP 2003297325 A